# FASCICULE DE BREVET EUROPEEN

(11) **EP 0 902 879 B1**
(45) Date de publication et mention de la délivrance du brevet: **30.01.2002**
(21) Numéro de dépôt: 97926087.4
(22) Date de dépôt: 03.06.1997
(51) Int. Cl.: G01C 21/00

(54) **PROCEDE DE PILOTAGE AUTOMATIQUE D'UN VEHICULE POUR L'EVITEMENT LATERAL D'UNE ZONE FIXE**
AUTOMATISCHE KORREKTURMETHODE FÜR EIN FAHRZEUG ZUR SEITLICHEN VERMEIDUNG EINER FESTEN ZONE
METHOD FOR AUTOMATICALLY CONTROLLING A VEHICLE FOR THE LATERAL AVOIDANCE OF A FIXED ZONE

(30) Priorité: 07.06.1996 FR 9607077
(43) Date de publication de la demande: 24.03.1999
(73) Titulaire: THALES AVIONICS S.A., 78141 Vélizy Villacoublay Cédex (FR)
(72) Inventeur: DEKER, Guy, Thomson-CSF S.C.P.I., F-94117 Arcueil Cedex (FR)
(74) Mandataire: Guérin, Michel
(86) Numéro de dépôt international: FR9700971
(87) Numéro de publication internationale: WO9747947

(56) Documents cités:
- EP-A- 0 381 178
- WO-A-95/19547
- PROCEEDINGS OF THE DIGITAL AVIONICS SYSTEMS CONFERENCE, LOS ANGELES, OCT. 14 - 17, 1991, no. CONF. 10, 14 Octobre 1991, INSTITUTE OF ELECTRICAL AND ELECTRONICS ENGINEERS, pages 420-425, XP000309279 STILES P ET AL: "ROUTE PLANNING"

## Description

La présente invention concerne un procédé de pilotage automatique d'un véhicule permettant l'évitement latéral d'une zone fixe, par exemple une zone dont la traversée est interdite.

Elle s'applique notamment, mais non exclusivement, au pilotage automatique d'un aérodyne dont la route initialement prévue traverse une zone fixe de contours prédéfinis qu'il faut contourner avec interdiction d'y pénétrer.
Une telle situation se produit par exemple lorsque le pilote reçoit pendant le vol un message lui interdisant de survoler une zone située sur sa route. De tels cas se présentent notamment lorsque survient l'interdiction de survoler une zone de l'espace aérien, comme une zone militaire, ou un état.

De telles informations sont, par exemple, reçues par l'aérodyne par l'intermédiaire d'un dispositif de transmission de données numériques, par exemple Data-Link, et ont été envoyées par une station au sol. Les contours de la zone à éviter figurent dans la documentation de bord, ou bien sont transmises par la station au sol.

A l'heure actuelle, c'est au pilote de gérer manuellement le problème, en effectuant un évitement à vue de la zone, ces opérations devant tenir compte d'un nombre important de paramètres, et notamment, de la réglementation en vigueur dans l'espace aérien traversé, des performances de l'aérodyne, et de la masse de carburant dans les réservoirs de celui-ci. Par ailleurs, il peut se produire que le pilote reçoit de telles informations que peu de temps avant de pénétrer dans la zone interdite, et dans bien des cas, ce temps est insuffisant pour lui permettre de prendre en compte tous les paramètres nécessaires afin de déterminer la meilleure trajectoire d'évitement.

La présente invention a pour objet de supprimer ces inconvénients. Elle vise également à déterminer la nouvelle route à suivre, en réduisant au minimum la distance à parcourir. A cet effet, elle propose un procédé de pilotage automatique d'un véhicule pour l'évitement latéral d'une zone fixe.

Le procédé selon l'invention est caractérisé en ce qu'il comprend successivement les étapes suivantes :
- la modélisation du contour de la zone à éviter par une forme polygonale convexe, par approximation du contour de la zone par une succession de segments, et élimination des points de concavité et des segments trop courts,
- la localisation de la route prévue par rapport à la zone modélisée,
- le calcul de tronçons de route bâbord et tribord de sortie et de retour à la route prévue, formant un angle prédéterminé avec celle-ci et rejoignant le point anguleux de la forme polygonale le plus proche de la route prévue, de manière à obtenir deux routes d'évitement bâbord et tribord formées par les tronçons de route de sortie et retour et par les portions du contour modélisé reliant respectivement les tronçons de route de transition bâbord et tribord de sortie et de retour, et
- la sélection d'une des deux routes d'évitement bâbord ou tribord en fonction d'un critère prédéterminé.

Grâce à ces dispositions, le pilote se trouve complètement déchargé de la modification du plan de vol et du pilotage de l'aérodyne en vue d'éviter la zone interdite. En outre, la nouvelle route a été optimisée en réduisant au minimum la distance à parcourir.

La présente invention concerne également un procédé de changement de cap optimisé pour contourner la zone interdite modélisée par une forme polygonale convexe, c'est-à-dire, avec survol obligatoire du point de changement de cap et interdiction de pénétrer dans la zone à l'intérieur du virage.

A l'heure actuelle, ces changements cap sont effectués avec un rayon de giration constant prédéterminé, par exemple qui dépend de la vitesse de l'aérodyne, de manière à conserver un angle de roulis constant. Pour respecter un rayon de giration prédéterminé, il est donc nécessaire, de commencer le virage au moment du survol du point de passage, auquel cas l'aérodyne se trouvera après survol du point de passage, à l'extérieur du virage prévu et devra suivre ensuite une trajectoire de rejointe vers la route initialement prévue.

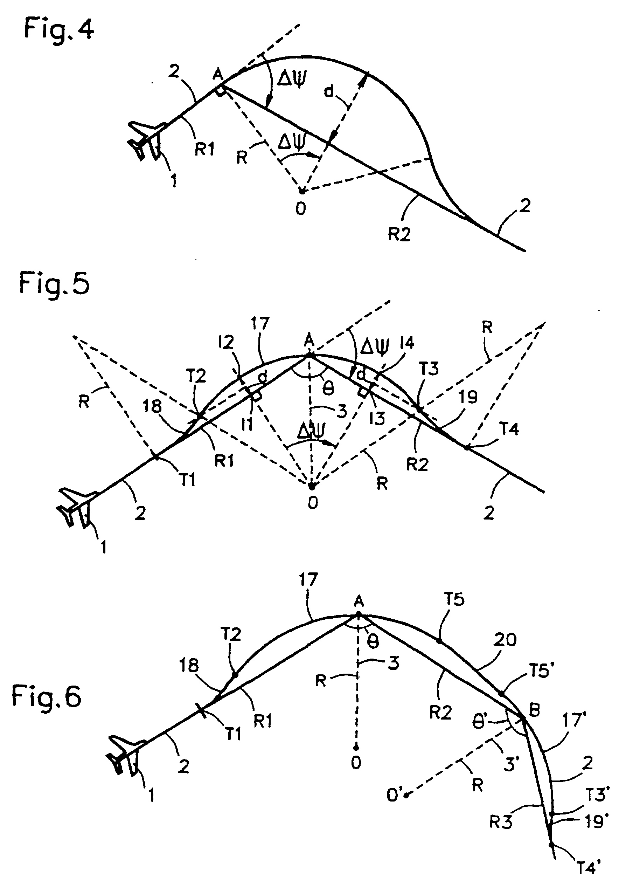

II s'avère, comme représenté sur la figure 4, que lors du changement de cap Δψ, au moment du survol du point de passage, l'aérodyne s'éloigne significativement de la route prévue R1, R2, et se retrouve même à une distance d relativement importante de celle-ci, ce qui d'une part entraîne un allongement de trajectoire relativement important, et d'autre part n'est pas souhaitable vis-à-vis de la surveillance et du contrôle aérien (respect de marges latérales de largeur variables).

Pour supprimer ces inconvénients, le procédé de pilotage selon l'invention comprend, à chaque point anguleux du contour polygonal convexe de la zone à éviter, le calcul et le suivi par le véhicule d'une trajectoire courbe de changement de cap passant par ledit point anguleux, dont le centre de giration se trouve sur la bissectrice intérieure de l'angle formé par les deux portions de route rectilignes qui se rejoignent au niveau du point anguleux.

Une telle trajectoire de changement de cap offre de nombreux avantages par rapport à la trajectoire de l'art antérieur illustrée par la figure 4. En effet, elle permet de réaliser un gain de plusieurs secondes (jusqu'à 35 secondes ou 4,5 milles nautiques pour un virage à 90 degrés). Elle s'écarte moins de la route prévue définie par les tronçons de route rectilignes (moins de 30% de l'écart induit par la trajectoire de transition classique), ce qui présente un intérêt important pour la surveillance et le contrôle aérien. Elle présente également un risque moindre d'aboutir à des enchaînements de virages qui s'entrecroisent si les segments de route sont courts.

Par ailleurs, si on compare cette trajectoire de changement de cap avec la trajectoire classique qui est constituée par une courbe tangente aux deux portions de route, située à l'intérieur du virage, on constate que la trajectoire selon l'invention s'écarte moins des portions de route que la trajectoire classique.

Avantageusement, le procédé selon l'invention comprend le calcul et le suivi de deux portions de trajectoire courbe de liaison, respectivement entre la première portion de route et la trajectoire de changement de cap, et entre celle-ci et la seconde portion de route, ces deux portions de trajectoire de liaison ayant le même rayon de courbure que celui de la trajectoire de changement de cap, et étant tangentes à celle-ci et respectivement aux deux portions de route.

Un mode de réalisation du procédé selon l'invention sera décrit ci-après, à titre d'exemple non limitatif, avec référence aux dessins annexés dans lesquels :
La figure 1 représente schématiquement l'équipement électronique embarqué à bord d'un aérodyne permettant de mettre en oeuvre le procédé d'évitement selon l'invention ;
La figure 2 montre schématiquement l'algorithme exécuté pour mettre en oeuvre le procédé d'évitement ;
La figure 3 montre une zone interdite se situant sur la route d'un aérodyne pour illustrer le procédé d'évitement ;
La figure 4 représente schématiquement la trajectoire de transition entre deux tronçons de route selon l'art antérieur ;
La figure 5 montre la trajectoire de changement de cap élaborée par le procédé de pilotage selon l'invention ; et
La figure 6 montre la trajectoire de transition optimisée dans le cas de deux changements de cap proches.

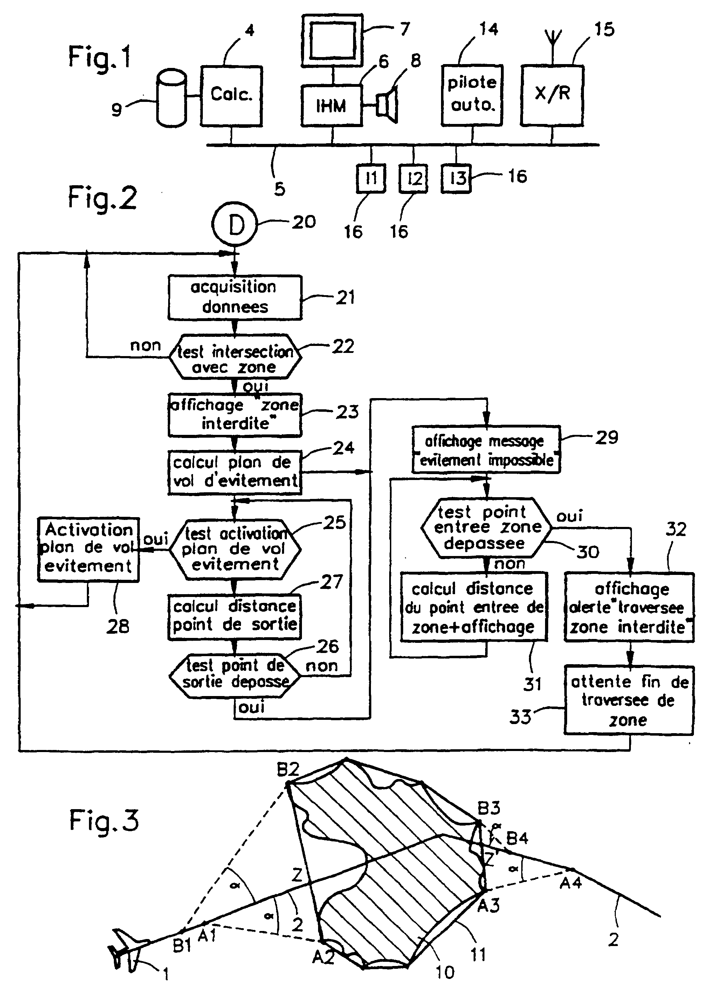

Tel que représenté sur la figure 1, le procédé d'évitement selon l'invention est particulièrement conçu pour être exécuté par un calculateur 4 installé à bord d'un aérodyne, qui est couplé par l'intermédiaire d'un bus de transmission de données 5 appelé "bus avion", aux équipements de navigation incluant un dispositif de pilotage automatique 14 et des instruments de navigation 16, à un dispositif de transmission de données 15, par exemple Data-Link, ainsi qu'à un dispositif d'interface hommelmachine (IHM) 6 comprenant un élément de commande et des éléments de signalisation, tel qu'un écran de visualisation 7 et un haut-parleur 8 installés dans le cockpit.
D'une manière connue, le dispositif de pilotage automatique 14 comprend une mémoire dans laquelle est enregistrée la trajectoire prévue de l'aérodyne, constituée d'une succession de segments de droite entre le point de départ et le point de destination, et de trajectoires de transition permettant de relier un segment à l'autre.

Le dispositif de transmission de données 15 est susceptible de recevoir des informations indiquant que le survol d'une zone aérienne indiquée par exemple par son nom est momentanément interdit. Par ailleurs, le calculateur 4 est par exemple couplé à une base de données géographiques de navigation 9 dans laquelle sont mémorisés notamment les contours des zones aériennes du territoire normalement survolé par l'aérodyne. Le pilote de l'aérodyne peut également introduire lui-même les contours de la zone interdite au moyen de l'interface homme/machine 6.

L'algorithme montré sur la figure 2 est exécuté par le calculateur 4 installé à bord de l'aérodyne. II consiste tout d'abord à acquérir les données fournies par le dispositif de transmission de données 15 et par le pilote par l'intermédiaire du dispositif d'interface homme/machine 6 (étape 21).

Lorsqu'une information relative à l'interdiction de traversée d'une zone aérienne est reçue, le calculateur 4 procède à la localisation de la route définie par le plan de vol prévu, par rapport à la zone interdite. Pour cela, lorsque l'information reçue n'est pas complétée par une définition du contour de la zone, le calculateur 4 va rechercher ces informations dans sa base de données 9, et accède à la définition du plan de vol prévu, lequel est par exemple mémorisé par le dispositif de pilotage automatique 14 (étape 22).

Si l'aérodyne ne va pas pénétrer dans la zone interdite, on revient au début 20 de l'algorithme pour poursuivre l'analyse des informations fournies par le dispositif de transmission de données 15 et par l'IHM 6. Dans le cas contraire, le calculateur 4 envoie à l'étape 23 un message destiné à l'afficheur 7 pour avertir le pilote que la route 2 à parcourir par l'aérodyne 1 traverse une zone interdite 10 (figure 3). Cette information peut être complétée par la l'affichage sur l'écran 7 de la carte de la région survolée avec indication en surimpression de la zone interdite et éventuellement de ses caractéristiques.

Le calculateur déclenche ensuite le calcul d'une trajectoire d'évitement (étape 24) qui consiste tout d'abord, à modéliser les contours de la zone interdite 10. Cette modélisation consiste à assimiler le contour de la zone 10 à un polygone, puis à éliminer les angles concaves du polygone et les côtés trop courts, de manière à obtenir un polygone 11 entièrement convexe.

II s'agit ensuite de déterminer les portions de route bâbord B1-B2 et tribord A1-A2 de sortie de la route prévue pour éviter la zone interdite 10. A cet effet, le calculateur 4 positionne la route 2 prévue par rapport aux contours modélisés de la zone 10. Ces portions de route s'écartent de la route prévue 2 d'un angle α prédéterminé de 45 degrés ou 30 degrés en fonction de la réglementation aérienne en vigueur dans la région survolée, et rejoignent respectivement les points B2, A2 du polygone 11 les plus proches de la route prévue 2 de part et d'autre du point d'entrée Z de la route prévue 2 dans le polygone 11.

Cependant, il peut s'avérer qu'il soit impossible de déterminer les portions de route de sortie, lorsque l'aérodyne 1 se trouve trop proche de la zone interdite 10. Cette situation se produit lorsque l'angle de sortie de la route initiale qui permet d'éviter la zone est supérieur à un angle α prédéterminé. Lorsque ce cas se produit, le calculateur 4 exécute l'algorithme à partir de l'étape 29 où est déclenché l'affichage d'un message "évitement automatique impossible".

Dans le cas contraire, le calculateur 4 détermine ensuite les portions de route bâbord B3-B4 et tribord A3-A4 de retour à la route prévue 2. Ces portions de route rejoignent la route prévue avec un angle α et sont reliées au polygone 11 respectivement aux points B3, A3 les plus proches de la route prévue 2, de part et d'autre du point de sortie Z' de la route prévue 2 du polygone 11.

Pour déterminer complètement les routes d'évitement tribord A1-A4 et bâbord B1-B4 de la zone interdite 10, il suffit ensuite de relier respectivement les portions de route de sortie tribord A1-A2 et bâbord B1-B2 aux portions de route de retour tribord A3-A4 et bâbord B3-B4 par les portions de contour A2-A3, B2-B3 du polygone 11 reliant les points respectivement A2 et A3, et B2 et B3.

Les points de sortie de route tribord A1 et bâbord B1 pouvant être différents, de même que les points de retour tribord A4 et bâbord B4 sur la route prévue, il importe de reconstituer des routes d'évitement ayant les mêmes points d'extrémité. Ainsi, si A1 est plus rapproché de la zone que B1, comme dans la figure 3, on rajoute le segment B1-A1 à la trajectoire tribord A1-A2-A3-A4. De même, si le point de retour B4 est plus proche de la zone que A4, on rajoute le segment B4-A4 à la trajectoire bâbord B1-B2-B3-B4.

Il s'agit ensuite de choisir l'une des deux routes d'évitement tribord A1-A4 et bâbord B1-B4 ainsi déterminées. Pour cela, le calculateur 4 calcule la longueur de chacune des deux nouvelles routes B1-A1-A2-A3-A4, B1-B2-B3-B4-A4, pour sélectionner la plus courte, et si ces deux nouvelles routes sont d'égale longueur, on choisit celle qui se trouve au vent de la zone 10.

La route d'évitement sélectionnée permet de modifier le plan de vol initial fourni par le dispositif de pilotage automatique 14, qui peut être affiché sur l'écran 7, avec demande de validation par le pilote.

A l'étape 25, le calculateur 4 se met en attente de la validation par le pilote du nouveau plan de vol incluant la route d'évitement A1-A4 sélectionnée, et ce jusqu'à ce que soit dépassé le point de sortie A1 de la route 2 initialement prévue 2 (étape 26). Pendant cette attente, le calculateur 4 calcule et affiche la valeur de la distance de ce point de sortie A1, compte tenu de la position courante de l'aérodyne 1, cette valeur étant rafraîchie périodiquement (étape 27).

Si pendant cette attente, le pilote a validé le nouveau plan de vol, celui-ci est envoyé au dispositif de pilotage automatique 14 en remplacement de celui 2 initialement prévu, qui devient alors actif (étape 28). Ce nouveau plan de vol permet l'évitement automatique de la zone si les systèmes de gestion de plan de vol et de pilotage automatique en mode latéral sont en fonction.

Si le pilote n'a pas validé le nouveau plan de vol avant le franchissement du point de sortie A1, le calculateur 4 envoie à l'étape 29 un message au pilote pour indiquer que ce point de sortie est dépassé et que l'évitement de la zone est maintenant impossible. Ensuite, à l'étape 30, il calcule la distance entre la position courante de l'aérodyne 1 et le point Z d'entrée dans la zone interdite délimitée par le polygone 12. Tant que l'aérodyne 1 n'a pas atteint le point Z, cette distance est affichée avec rafraîchissement périodique (étape 31). Lorsque ce point Z est franchi, le calculateur 4 envoie un message d'alerte qui signale au pilote que l'aérodyne 1 se trouve dans une zone interdite (étape 32). Le calculateur 4 se met ensuite en attente de la sortie de la zone interdite 10, compte tenu de la position du point de sortie Z' de cette zone, ainsi que de la position courante et de la vitesse de l'aérodyne 1 (étape 33), avant de revenir à l'étape 18 d'acquisition des données, avec effacement du message d'alerte.

Avant l'envoi du nouveau plan de vol au dispositif de pilotage automatique, mais après validation par le pilote, le calculateur 4 procède à l'étape 28 au calcul de la trajectoire permettant le suivi de ce nouveau plan de vol, et en particulier, les trajectoires de transition permettant de passer d'un tronçon de route du plan de vol à un autre.

La transition au niveau des points de changement de cap tels que A1 et A4, en dehors des contours de la zone polygonale 11 se fait de manière classique par l'intérieur du virage, en déterminant un cercle de rayon prédéterminé tangent aux deux tronçons de route à relier.

Lorsqu'il s'agit de points de changement de cap appartenant au contour de la zone polygonale convexe 11, il n'est pas possible d'effectuer le changement de cap par l'intérieur du virage, car cela implique de pénétrer dans la zone interdite 10. Le calculateur 4 va donc, selon l'invention, élaborer une trajectoire passant par l'extérieur du virage et par le point de virage.
Tel que représenté sur la figure 5 montrant deux tronçons de route reliés à un point A, formant un angle θ, et impliquant un changement de cap d'un angle Δψ, le calculateur 4 calcule une trajectoire courbe 17 passant par le point A, dont le centre de giration O est situé sur la bissectrice intérieure 3 de l'angle θ et à une distance R du point A. Cette distance R correspond au rayon de giration de la trajectoire courbe 17, qui est déterminé en fonction de la vitesse de l'aérodyne 1 qui doit effectuer le virage avec un angle de roulis prédéterminé.

Il s'agit ensuite de déterminer les portions de trajectoire de liaison 18, 19 entre les trajectoires rectilignes le long des tronçons de route R1, R2, et la trajectoire courbe 17. La trajectoire de liaison 18 permettant de relier le tronçon R1 avec la trajectoire courbe 17 est constituée par une portion de trajectoire courbe de même rayon de giration R, et est tangente en T1 au tronçon de route R1 et en T2 à la trajectoire courbe 17. De même la trajectoire de liaison 19 est une portion de trajectoire courbe de rayon de giration R, qui est tangente en T3 à la trajectoire courbe 17 et en T4 au tronçon de route R2.

Il est à noter que les points T2 et T3 correspondent au point d'intersection de la trajectoire courbe 17 avec les médiatrices des segments d délimités respectivement par les points d'intersection I1, 12, 13, I4 de droites perpendiculaires aux tronçons de route R1, R2, passant par le centre de giration O, avec les tronçons de route R1, R2 et la trajectoire courbe 17.

On peut également remarquer sur la figure 6 que le procédé selon l'invention convient parfaitement lorsque l'on se trouve en présence de deux points A, B de changement de cap rapprochés. Cette figure montre trois tronçons de route R1, R2, R3 reliés par les points A et B, et formant en A et B des angles θ et θ'. Comme précédemment, pour effectuer ces deux changements de cap, on calcule deux trajectoires courbes 17, 17' passant respectivement par A et B, et présentant un centre de giration O, O' et un rayon de giration R, ces deux trajectoires courbes rejoignant respectivement les tronçons de route R1 et R3 aux points T1 et T4' par deux trajectoires de liaison 18, 19'.

Dans l'exemple de la figure 6, il n'est pas possible de relier les trajectoires courbes 17, 17' au tronçon de route R2, celui-ci étant trop court. Dans ce cas, il suffit de relier les deux trajectoires 17, 17' par une trajectoire de liaison 20 tangente à celles-ci aux points T5 et T5'.

Si l'on compare la trajectoire de la figure 4 avec celles illustrées par les figures 5 et 6, ces dernières s'écartent beaucoup moins de la route R1-R2 prévue et rejoignent celle-ci beaucoup plus rapidement, ce qui permet une surveillance et un contrôle aérien plus efficace.

Ainsi, l'écart dans le cas d'un contournement avec survol classique du point (figure 4) est égal à R(1-cos Δψ). Dans la solution proposée par l'invention, cet écart n'est plus que de R(1-cos Δψ /2), soit environ trois fois plus petit à Δψ =90 degrés.

Par ailleurs, dans le cas d'un tronçon de route R2 court, d'après la figure 6, on reste proche de la route prévue. Par contre dans le cas de la figure 4, il apparaît clairement qu'on aura du mal à rejoindre le tronçon de route R3 suivant.

## Revendications

1. Procédé de pilotage d'un véhicule pour l'évitement latéral d'une zone fixe (10) à partir d'une route initialement prévue, de la position et de la vitesse courante du véhicule (1), et du contour de la zone (10),
**caractérisé en ce qu'**il comprend successivement les étapes suivantes :
- la modélisation du contour de la zone à éviter (10) par une forme polygonale convexe (11), par approximation du contour de la zone par une succession de segments, et élimination des points de concavité et des segments trop courts,
- la localisation de la route prévue (2) par rapport à la zone modélisée (11),
- le calcul de tronçons de route bâbord et tribord de sortie et de retour (A1-A2, B1-B2, A3-A4, B3-B4) à la route prévue (2), formant un angle (α) prédéterminé avec celle-ci et rejoignant un point anguleux (A2, B2, A3, B3) du contour polygonal (11), de manière à obtenir deux routes d'évitement bâbord (B1-B4) et tribord (A1-A4) formées par les tronçons de route de sortie (A1-A2, B1, B2) et de retour (A3-A4, B3-B4) et par les portions (A2-A3, B2-B3) du contour modélisé (11) reliant respectivement les tronçons de route bâbord et tribord de sortie et de retour (A1-A2, B1-B2, A3-A4, B3-B4), et
- la sélection d'une des deux routes d'évitement bâbord (B1-B4) et tribord (A1-A4) en fonction d'un critère prédéterminé.

2. Procédé selon la revendication 1,
**caractérisé en ce que** les tronçons de route bâbord et tribord de sortie et de retour (A1-A2, B1-B2, A3-A4, B3-B4) relient la route prévue (2) respectivement aux points anguleux (A2, B2, A3, B3) du contour polygonal (11), situés de part et d'autre de la route prévue, et les plus proches des points d'intersection (Z, Z') de la route prévue (2) avec le contour polygonal (11).

3. Procédé selon la revendication 1 ou 2,
**caractérisé en ce qu'**il comprend en outre l'ajout aux deux routes d'évitement tribord (A1-A4) et bâbord (B1-B4) de tronçons (B1-A1, B4-A4) de la route initiale (2) de manière à ce que les deux routes ainsi obtenues aient les mêmes extrémités, le calcul et la comparaison de la longueur des routes bâbord (B1-B4-A4) et tribord (B1-A1-A4) obtenues, la route d'évitement (A1-A4) la plus courte étant sélectionnée.

4. Procédé selon l'une des revendications précédentes,
**caractérisé en ce qu'**il comprend une étape préalable de recherche du tronçon de la route prévue (2) traversant la zone interdite (10), et de calcul du point d'entrée (Z) prévu dans ladite zone, le calcul de la route d'évitement étant effectué si le véhicule (1) se trouve suffisamment éloigné du point d'entrée prévu (Z) compte tenu de la vitesse du véhicule.

5. Procédé selon l'une des revendications précédentes,
**caractérisé en ce qu'**il comprend en outre périodiquement le calcul et l'affichage (27) de la distance entre la position courante du véhicule (1) et le point de sortie (A1) de la route initiale (2) vers la route d'évitement (A1-A4) sélectionnée, l'activation (28) de la nouvelle route incluant la route d'évitement sélectionnée étant effectuée si cette nouvelle route a été validée.

6. Procédé selon l'une des revendications précédentes,
**caractérisé en ce qu'**il comprend périodiquement le calcul et l'affichage (31) de la distance entre la position courante du véhicule (1) et de la zone à éviter (10), si le point de sortie (A1) est dépassé sans que la nouvelle route ait été validée, et l'affichage (32) d'un message d'alerte lorsque le véhicule (1) pénètre dans la zone à éviter (10).

7. Procédé selon l'une des revendications précédentes,
**caractérisé en ce qu'**il comprend, à chaque point anguleux du contour polygonal de la zone à éviter, situé sur la route d'évitement sélectionnée, le calcul et le suivi par le véhicule (1) d'une trajectoire courbe (17) de changement de cap passant par ledit point anguleux (A), dont le centre de giration (O) se trouve sur la bissectrice intérieure (3) de l'angle (θ) formé par les deux portions de route rectilignes (R1, R2) qui se rejoignent au niveau du point anguleux (A).

8. Procédé selon la revendication 7,
**caractérisé en ce qu'**il comprend en outre le calcul et le suivi de deux portions de trajectoire courbe de liaison (18, 19), respectivement entre la première portion de route (R1) et la trajectoire de changement de cap (17), et entre celle-ci et la seconde portion de route (R2), ces deux portions de trajectoire de liaison (18, 19) ayant le même rayon de giration (R) que celui de la trajectoire de changement de cap (17), et étant tangentes à celle-ci et respectivement aux deux portions de route (R1, R2).

9. Procédé selon la revendication 7 ou 8,
**caractérisé en ce que**, dans le cas de deux changements de cap rapprochés (A, B), il comprend en outre le calcul et le suivi d'une seconde trajectoire courbe de changement de cap (17') reliée à la première trajectoire de changement de cap (17) par une trajectoire de liaison (20) rectiligne tangente aux deux trajectoires courbes de changement de cap (17, 17').

10. Procédé selon l'une des revendications 7 à 9,
**caractérisé en ce que** le rayon de giration (R) est calculé en fonction de la vitesse du véhicule (1) de manière à respecter un angle de roulis prédéterminé du véhicule.

## Patentansprüche

1. Steuerverfahren für ein Fahrzeug, um eine feste Zone (10) ausgehend von einer ursprünglich vorgesehenen Route und abhängig von der Position und der aktuellen Geschwindigkeit des Fahrzeugs (1) und dem Umriß der Zone (10) seitlich zu umgehen, **dadurch gekennzeichnet, daß** es nacheinander die folgenden Schritte aufweist:
- Modellbildung des Umrisses der zu vermeidenden Zone (10) durch eine polygonale, konvexe Form (11) mittels Annäherung des Umrisses der Zone durch eine Folge von Segmenten sowie Eliminierung der konkaven Punkte und der zu kurzen Segmente,
- Lokalisierung der vorgesehenen Route (2) bezüglich des polygonalen Modells (11),
- Berechnung von Routenabschnitten des Umleitungsbeginns (A1-A2, B1-B2) und der Wiedereinleitung (A1-A2, B1-B2; A3-A4, B3-B4) in die vorgesehene Route (2), über einen vorbestimmten Winkel (α) mit dieser Route, um einen Eckpunkt (A2, A3; B2, B3) des polygonalen Umrisses (11) zu erreichen, sodaß man eine Umleitungsroute links herum (B1-B4) und eine Umleitungsroute rechts herum (A1-A4) in Form von Routenabschnitten des Umleitungsbeginns (A1-A2, B1-B2) und der Wiedereinleitung (A3-A4; B3-B4) und von Abschnitten (A2-A3; B2-B3) des polygonalen Umrisses (11) erhält, die zwischen den Abschnitten des Umleitungsbeginns und den Wiedereinleitungsabschnitten (A1-A2, B1-B2; A3-A4, B3-B4) der linken und rechten Umleitungsroute liegen,
- und die Auswahl einer dieser Umleitungsrouten links herum (B1-B4) oder rechts herum (A1-A4) abhängig von einem vorgegebenen Kriterium.

2. Verfahren nach Anspruch 1, **dadurch gekennzeichnet, daß** die Routenabschnitte des Umleitungsbeginns und der Wiedereinleitung (A1-A2, B1-B2; A3-A4, B3-B4) links und rechts herum die vorgesehene Route (2) mit den Eckpunkten (A2, B2, A3, B3) des polygonalen Umrisses (11) verbinden, die zu beiden Seiten der vorgesehenen Route und den Schnittpunkten (Z, Z') der vorgesehenen Route (2) mit dem polygonalen Umriß (11) am nächsten liegen.

3. Verfahren nach Anspruch 1 oder 2, **dadurch gekennzeichnet, daß** außerdem den beiden Umleitungsrouten (A1-A4, B1-B4) Abschnitte (B1-A1, B4-A4) der ursprünglich vorgesehenen Route (2) hinzugefügt werden, sodaß die beiden so erhaltenen Routen gleichen Anfang und gleiches Ende besitzen, worauf die beiden so erhaltenen Routen (B1-B4-A4; B1-A1-A4) berechnet und verglichen werden und dann die kürzere Umleitungsroute (A1-A4) ausgewählt wird.

4. Verfahren nach einem der vorstehenden Ansprüche, **dadurch gekennzeichnet, daß** es einen einleitenden Verfahrensschritt enthält, bei dem der Streckenabschnitt der vorgesehenen Route (2) gesucht wird, der die verbotene Zone (10) durchquert, und der vorgesehene Eindringpunkt (Z) in diese Zone berechnet wird, wobei die Berechnung der Umleitungsroute durchgeführt wird, so lange das Fahrzeug (1) unter Berücksichtigung seiner Geschwindigkeit ausreichend weit vom Eindringpunkt (Z) entfernt ist.

5. Verfahren nach einem der vorstehenden Ansprüche, **dadurch gekennzeichnet, daß** es außerdem eine periodische Berechnung und Anzelge (27) des Abstands zwischen der aktuellen Position des Fahrzeugs (1) und dem Punkt des Umleitungsbeginns (A1) von der ursprünglichen Route (2) zur ausgewählten Umgehungsroute (A1-A4) enthält, wobei die Aktivierung (28) der neuen Route unter Einschluß der ausgewählten Umleitungsroute durchgeführt wird, wenn die neue Route bestätigt wurde.

6. Verfahren nach einem der vorstehenden Ansprüche, **dadurch gekennzeichnet, daß** es eine periodische Berechnung und Anzeige (31) des Abstands zwischen der aktuellen Position des Fahrzeugs (1) und der zu vermeidenden Zone (10) enthält, wenn der Punkt des Umleitungsbeginns (A1) überschritten wurde, ohne daß die neue Route bestätigt worden wäre, und daß eine Warnmeldung angezeigt ward, wenn das Fahrzeug (1) in die zu vermeidende Zone (10) eindringt.

7. Verfahren nach einem der vorstehenden Ansprüche, **dadurch gekennzeichnet, daß** in jedem Eckpunkt des polygonalen Umrisses der zu vermeidenden Zone, der sich auf der ausgewählten Umleitungsroute befindet, ein gekrümmter Verlauf (17) des Richtungswechsels berechnet und von Fahrzeug (1) verfolgt wird, der durch den Eckpunkt (A) verläuft,
wobei der Krümmungsmittelpunkt (O) dieser Kurve sich auf der inneren Winkelhalbierenden (3) des Winkels (θ) befindet, der von den beiden Abschnitten geradliniger Strecken (R1, R2) gebildet wird, die sich in Höhe des Eckpunkts (A) treffen.

8. Verfahren nach Anspruch 7, **dadurch gekennzeichnet, daß** weiter zwei Abschnitte von kurvenförmigen Übergangsverläufen (18, 19) zwischen dem ersten Routenabschnitt (R1) und dem Verlauf des Richtungswechsels (17) sowie zwischen diesem und dem zweiten Routenabschnitt (R2) berechnet und verfolgt werden, wobei diese beiden Abschnitte von Übergangsverläufen (18, 19) den gleichen Krümmungsradius (R) wie der des Verlaufs (17) des Richtungswechsels besitzen und tangential zu diesem sowie zu je einem der beiden Routenabschnitte (R1, R2) verlaufen.

9. Verfahren nach Anspruch 7 oder 8, **dadurch gekennzeichnet, daß** im Fall von zwei nahe beieinander liegenden Richtungswechseln (A, B) außerdem ein zweiter gekrümmter Verlauf des Richtungswechsels (17') berechnet und verfolgt wird, der an den ersten Richtungswechselverlauf (17) über eine geradlinige Strecke (20) angeschlossen ist, der zu den beiden gekrümmten Verläufen des Richtungswechsels (17, 17') tangential verläuft.

10. Verfahren nach einem der Ansprüche 7 bis 9, **dadurch gekennzeichnet, daß** der Krümmungsradius (R) abhängig von der Geschwindigkeit des Fahrzeugs (1) so berechnet wird, daß ein vorbestimmter Rollwinkel des Fahrzeugs eingehalten wird.

## Claims

1. Method for piloting a vehicle for the lateral avoidance of a fixed zone (10) starting from an initially planned route, and based on the position and the current speed of the vehicle (1), and on the contour of the zone (10),
**characterized in that** it comprises the following steps in succession:
- the modelling of the contour of the zone to be avoided (10) by a convex polygonal shape (11), by approximating the contour of the zone by a succession of segments, and eliminating the points of concavity and the excessively short segments,
- the locating of the planned route (2) with respect to the modelled zone (11),
- the computation of port and starboard sections of route for exit and for return (A1-A2, B1-B2, A3-A4, B3-B4) to the planned route (2), forming a predetermined angle (α) with the latter and meeting up with a corner point (A2, B2, A3, B3) of the polygonal contour (11), so as to obtain two avoidance routes, port (B1-B4) and starboard (A1-A4), formed by the exit (A1-A2, B1, B2) and return (A3-A4, B3-B4) sections of route and by the portions (A2-A3, B2-B3) of the modelled contour (11) respectively connecting the port and starboard exit and return sections of route (A1-A2, B1-B2, A3-A4, B3-B4), and
- the selection of one of the two avoidance routes, port (B1-B4) and starboard (A1-A4) as a function of a predetermined criterion.

2. Method according to Claim 1,
**characterized in that** the port and starboard exit and return sections of route (A1-A2, B1-B2, A3-A4, B3-B4) connect the planned route (2) respectively to the corner points (A2, B2, A3, B3) of the polygonal contour (11), which are situated on either side of the planned route, and which are closest to the points of intersection (Z, Z') of the planned route (2) and the polygonal contour (11).

3. Method according to Claim 1 or 2,
**characterized in that** it furthermore comprises the addition of sections (B1-A1, B4-A4) of the initial route (2) to the two avoidance routes, starboard (A1-A4) and port (B1-B4), in such a way that the two routes thus obtained have the same ends, the computation and the comparison of the length of the port (B1-B4-A4) and starboard (B1-A1-A4) routes obtained, the shorter avoidance route (A1-A4) being selected.

4. Method according to one of the preceding claims,
**characterized in that** it comprises a prior step of searching for the section of the planned route (2) traversing the prohibited zone (10), and of computing the planned point of entry (Z) into the said zone, the computation of the avoidance route being performed if the vehicle (1) lies sufficiently far from the planned point of entry (Z) having regard to the speed of the vehicle.

5. Method according to one of the preceding claims,
**characterized in that** it furthermore comprises periodically the computation and display (27) of the distance between the current position of the vehicle (1) and the point of exit (A1) from the initial route (2) to the selected avoidance route (A1-A4), the activation (28) of the new route including the selected avoidance route being performed if this new route has been confirmed.

6. Method according to one of the preceding claims,
**characterized in that** it comprises periodically the computation and display (31) of the distance between the current position of the vehicle (1) and the zone to be avoided (10), if the point of exit (A1) has been passed without the new route having been confirmed, and the display (32) of an alert message when the vehicle (1) enters the zone to be avoided (10).

7. Method according to one of the preceding claims,
**characterized in that** it comprises, at each corner point of the polygonal contour of the zone to be avoided, situated on the selected avoidance route, the computation and following by the vehicle (1) of a curved change of heading trajectory (17) passing through the said corner point (A), whose turning centre (O) lies on the interior bisector (3) of the angle (θ) formed by the two rectilinear portions of route (R1, R2) which meet up at the corner point (A).

8. Method according to Claim 7,
**characterized in that** it furthermore comprises the computation and following of two portions of curved linking trajectory (18, 19), respectively between the first portion of route (R1) and the change of heading trajectory (17), and between the latter and the second portion of route (R2), these two portions of linking trajectory (18, 19) having the same turning radius (R) as that of the change of heading trajectory (17), and being tangent to the latter and to the two portions of route (R1, R2) respectively.

9. Method according to Claim 7 or 8,
**characterized in that**, in the case of two closelyspaced changes of heading (A, B), it furthermore comprises the computation and following of a second curved change of heading trajectory (17') connected to the first change of heading trajectory (17) by a rectilinear linking trajectory (20) tangent to the two curved change of heading trajectories (17, 17').

10. Method according to one of Claims 7 to 9,
**characterized in that** the turning radius (R) is computed as a function of the speed of the vehicle (1) in such a way as to comply with a predetermined angle of roll of the vehicle.
